# EUROPÄISCHE PATENTSCHRIFT

(11) **EP 0 564 855 B1**
(45) Veröffentlichungstag und Bekanntmachung des Hinweises auf die Patenterteilung: **28.05.1997**
(21) Anmeldenummer: 93104313.7
(22) Anmeldetag: 17.03.1993
(51) Int. Cl.: H04N 5/93

(54) **Verfahren und Anordnung zur wiedergabeseitigen Aufbereitung eines frequenzmoduliert aufgezeichneten Videosignals**
Device and method for playback side processing of a video signal recorded in frequency modulated form
Dispositif et méthode de traitement du côté reproduction pour un signal vidéo enregistré sous forme de modulation de fréquence

(30) Priorität: 07.04.1992 DE 4211734
(43) Veröffentlichungstag der Anmeldung: 13.10.1993
(73) Patentinhaber: Grundig E.M.V. Elektro-Mechanische Versuchsanstalt Max Grundig GmbH & Co. KG, 90762 Fürth (DE)
(72) Erfinder: Grothaus, Ulrich, Dipl.-Ing. (FH), Grundig E.M.V., Kurgartenstrasse 37, W-8510 Fürth/Bay (DE)

(56) Entgegenhaltungen:
- EP-A- 0 267 529
- EP-A- 0 334 271
- DE-A- 3 539 816
- US-A- 4 240 038

## Beschreibung

Die Erfindung betrifft ein Verfahren und eine Anordnung zur wiedergabeseitigen Aufbereitung eines frequenzmoduliert aufgezeichneten Videosignals mit den im Oberbegriff des Anspruchs 1 bzw. 2 angegebenen Merkmalen.

Es ist bekannt, daß bei Videomagnetbandrecordern der durch das jeweilige Magnetband-/Magnetkopf-System bestimmte Wiedergabefrequenzgang zu hohen Frequenzen hin abfällt.

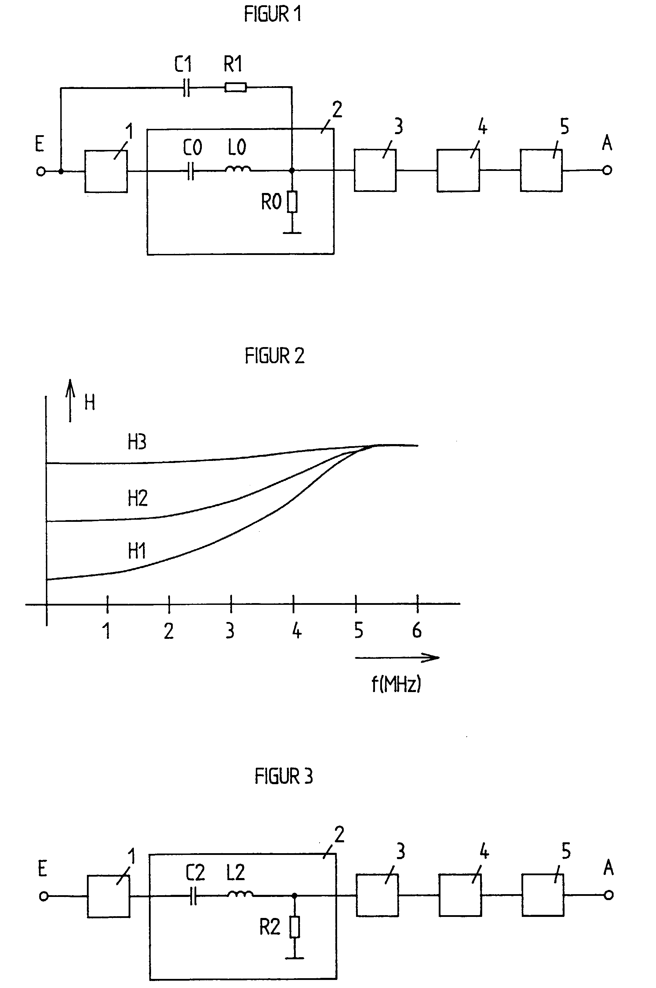

Zur Entzerrung eines derartigen Frequenzganges bzw. zur Anhebung der höheren Wiedergabefrequenzen ist es bereits bekannt, das wiedergegebene frequenzmodulierte Videosignal über einen Serienschwingkreis zu leiten, dessen Frequenzgang zu hohen Frequenzen hin zunimmt. Eine bekannte Anordnung, bei der diese Technik verwendet wird, ist in der Figur 3 gezeigt. Dem Eingang E wird das von den Wiedergabemagnetköpfen abgeleitete frequenzmodulierte Videosignal (Luminanzsignal) zugeführt. Dieses wird in einer Schaltung 1 zur automatischen Verstärkungsregelung derart verstärkt, daß an deren Ausgang unabhängig von der Amplitude des wiedergegebenen frequenzmodulierten Wiedergabesignals stets ein Signal bestimmter Amplitude zur Verfügung steht. Dieses gelangt an eine Schaltung 2 zur Signalentzerrung, die aus der Reihenschaltung eines Kondensators C2 und einer Spule L2 sowie einem vom Ausgangsanschluß der Spule gegen Masse geschalteten Widerstand R2 besteht. Das Ausgangssignal der Schaltung 2 zur Signalentzerrung wird in einem Verstärker 3 verstärkt, über einen Bandpaß 4 geleitet und in einem Frequenzdemodulator 5 demoduliert. Das demodulierte Videosignal steht am Ausgang A der Anordnung zur Verfügung.

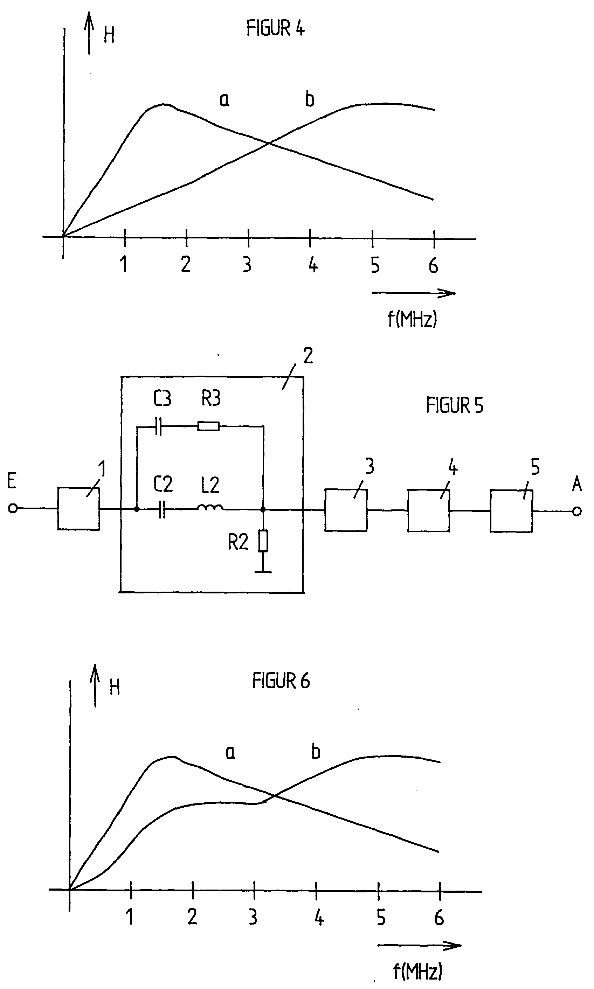

Die Wirkung der in Figur 3 gezeigten Entzerrungsschaltung wird im folgenden anhand von Figur 4 näher erläutert. Diese zeigt die Übertragungsfunktion H in Abhängigkeit von der Wiedergabefrequenz f. Die Kurve a charakterisiert das zu hohen Wiedergabefrequenzen hin abfallende Übertragungsverhalten bzw. den zu hohen Wiedergabefrequenzen hin abfallenden Frequenzgang des Magnetband-/Magnetkopf-Systems. Es ist ersichtlich, daß der durch die Kurve b angegebene
Frequenzgang der Entzerrungsschaltung 2 eine Anhebung der höheren Wiedergabefrequenzen bewirkt, so daß insgesamt gesehen ein ebener Frequenzgang entsteht.

Weiterhin ist es bereits bekannt, parallel zur Reihenschaltung des Kondensators und der Spule des in Figur 3 gezeigten Reihenschwingkreises die Reihenschaltung eines weiteren Kondensator C3 und eines Widerstandes R3 vorzusehen. Eine derartige Anordnung ist in der Figur 5 gezeigt.

Die Wirkung der in Figur 5 gezeigten Entzerrungsschaltung wird im folgenden anhand von Figur 6 näher erläutert. Diese zeigt die Übertragungsfunktion H in Abhängigkeit von der Wiedergabefrequenz f. Die Kurve a charakterisiert das zu hohen Wiedergabefrequenzen hin abfallende Übertragungsverhalten bzw. den zu hohen Wiedergabefrequenzen hin abfallenden Frequenzgang des Magnetband-/Magnetkopf-Systems. Es ist ersichtlich, daß der durch die Kurve b angegebene Frequenzgang der Entzerrungsschaltung 2 eine Anhebung der höheren Wiedergabefrequenzen bewirkt. Im Unterschied zu der in Figur 3 gezeigten Anordnung erfolgt hier zusätzlich eine Anhebung der Wiedergabefrequenzen im Bereich von etwa 1 - 3 MHz. Da der zur aufzeichnungsseitigen Frequenzmodulation verwendete Träger - wie bei den heutigen VHS-PAL-Heimvideorecordern allgemein üblich - bei ca. 5 MHz liegt, bedeutet dies gleichzeitig eine Anhebung der höherfrequenten Videosignalanteile und damit eine Erhöhung der Bildschärfe im wiedergegebenen Bild.

Die Nachteile der in den Figuren 3 und 5 gezeigten Anordnungen beruhen darauf, daß in der Praxis die Magnetbandqualität und damit das Übertragungsverhalten des jeweiligen Magnetband-/Magnetkopf-Systems der zur Aufzeichnung verwendeten Videokassetten stark streut. Da andererseits die Dimensionierng der in den Figuren 3 und 5 gezeigten Anordnungen fest ist, kann sie nur für eine bestimmte Übertragungscharakteristik optimiert werden. Bei allen anderen Übertragungscharakteristiken ist die Entzerrerwirkung nicht optimal, was Auswirkungen auf die Qualität des wiedergegebenen Bildes hat.

Weiterhin hat sich in der Praxis gezeigt, daß sich die Übertragungscharakteristik eines Magnetband-/Magnetkopf-Systems in Abhängigkeit von der Betriebsstundenzahl ändert. Auch in diesem Fall ist eine im Hinblick auf eine bestimmte Übertragungscharakteristik des Magnetband-/Magnetkopf-Systems optimierte Entzerrerkurve nachteilig.

Ferner ist zur Verbesserung der Qualität eines von einem Videorecorder wiedergegebenen Bildes die von der Firma Nokia entwickelte ASO-Schaltung und eine Weiterentwicklung davon, die mit ASO-Plus bezeichnet wird, bekannt, welche beispielsweise in den Zeitschriften Funkschau 15/1991, S. 50-52, und Funkschau 18/1988, S. 60-63, beschrieben sind. Diese Schaltungen, die ebenfalls auf das frequenzmodulierte Wiedergabesignal einwirken, arbeiten abhängig von dessen Amplitude und bewirken eine amplitudenabhängige, ggfs. elektronisch geregelte Phasenverschiebung, durch die die beim Aufzeichnungs-/Wiedergabevorgang entstehenden Phasenfehler kompensiert werden, was zu einer Bildverbesserung führt. Diese Schaltungen werden auch unterschiedlichen Magnetbandmaterialien und damit unterschiedlichen Übertragungscharakteristiken des Magnetband-/Magnetkopf-Systems gerecht.

Weiterhin ist aus der Zeitschrift Funkschau 1/1991, S.60-62, und der EP-A-0 464 772 das sog. I-HQ-System von Akai bekannt. Auch dieses System wird den in der Praxis verbreiteten qualitativ unterschiedlichen Magnetbandmaterialien gerecht. Dies geschieht dadurch, daß bei Aufzeichnung und Wiedergabe die Bandqualität ermittelt bzw. gemessen wird und in Abhängigkeit vom Ergebnis der Messung verschiedene Parameter im Sinne einer optimalen Wiedergabequalität eingestellt werden. Zu diesen Parametern gehören der Frequenzgang eines dem Aufnahmeverstärker vorgeschalteten Entzerrers, der Grad der Rauschverminderung, der Grad der Dropout-Kompensation und der Frequenzgang eines wiedergabeseitigen Entzerrers.

Der Erfindung liegt die Aufgabe zugrunde, einen neuen Weg zur Verbesserung der Qualität eines von einem Videomagnetbandrecorder wiedergegebenen Signals aufzuzeigen, zu dessen Realisierung nur ein minimaler Schaltungsaufwand notwendig ist und welcher automatisch unterschiedlichen Übertragungscharakteristiken des Magnetband-/Magnetkopf-Systems gerecht wird.

Die Aufgabe wird durch ein Verfahren mit den im Anspruch 1 bzw. durch eine Anordnung mit den im Anspruch 2 angegebenen Merkmalen gelöst. Eine vorteilhafte Ausgestaltung der im Anspruch 2 angegebenen Anordnung ist Gegenstand des Anspruchs 3.

Im folgenden wird die Erfindung anhand der Figuren näher erläutert.

Es zeigen:
- Figur 1: ein Ausführungsbeispiel für eine Anordnung nach der Erfindung,
- Figur 2: ein Diagramm zur Erläuterung der Wirkungsweise der in Figur 1 gezeigten Anordnung,
- Figur 3: ein Ausführungsbeispiel für eine erste bekannte Anordnung,
- Figur 4: ein Diagramm zur Erläuterung der Wirkungsweise der Entzerrerschaltung 2 in Figur 3,
- Figur 5: ein Ausführungsbeispiel für eine zweite bekannte Anordnung, und
- Figur 6: ein Diagramm zur Erläuterung der Wirkungsweise der Entzerrerschaltung 2 in Figur 5.

Die Figur 1 zeigt ein Ausführungsbeispiel für eine Anordnung nach der Erfindung. Dem Eingang E wird das von den Wiedergabemagnetköpfen abgeleitete frequenzmodulierte Videosignal (Luminanzsignal) zugeführt. Dieses wird in einer Schaltung 1 zur automatischen Verstärkungsregelung derart verstärkt, daß an deren Ausgang unabhängig von der Amplitude des wiedergegebenen frequenzmodulierten Wiedergabesignals stets ein Signal bestimmter Amplitude zur Verfügung steht. Dieses gelangt an eine Schaltung 2 zur Signalentzerrung, die aus der Reihenschaltung eines Kondensators CO und einer Spule LO sowie einem vom Ausgangsanschluß der Spule gegen Masse geschalteten Widerstand RO besteht.

Weiterhin werden vom Eingang der Schaltung 1 zur automatischen Verstärkungsregelung über den Kondensator C1 und den Widerstand R1 die niederfrequenten Anteile des wiedergegebenen frequenzmodulierten Signals ausgekoppelt und dem Verbindungspunkt zwischen der Spule LO und dem gegen Masse geschalteten Widerstand RO zugeführt.

Von diesem Verbindungspunkt aus gelangt das Signal über einen Verstärker 3 und einen Bandpaß 4 an einen Frequenzdemodulator 5, an dessen Ausgang A das demodulierte Videosignal zur Verfügung steht.

Im folgenden wird unter Bezugnahme auf die Figur 2 die Wirkungsweise der in Figur 1 gezeigten Anordnung bei Vorliegen von 3 qualitativ unterschiedlichen Magnetband-/Magnetkopf-Systemen beschrieben.

Bei einem Magnetband-/Magnetkopf-System mit einer schlechten Übertragungscharakteristik ist beispielsweise der Pegel des hochfrequenen Anteils (bei etwa 5 MHz) des am Eingang E anliegenden frequenzmodulierten Wiedergabesignals niedrig. Dieses Signal wird in der Schaltung 1 zur automatischen Verstärkungsregelung beispielsweise um den Faktor 4 auf einen gewünschten Pegel verstärkt und dann der Entzerrerschaltung 2 zugeführt. Ferner werden der Entzerrerschaltung 2 über den Kondensator C1 und den Widerstand R1 die niederfrequenten Anteile des wiedergegebenen frequenzmodulierten Signals zugeführt, die beispielsweise ebenfalls einen niedrigen Pegel aufweisen. Die Wirkung, die diese niederfrequenten Signalanteile auf die Entzerrercharakteristik aufweisen, ist demnach gering. Die insgesamt erhaltene Übertragungscharakteristik der Entzerrerschaltung ist in Figur 2 mit H1 bezeichnet. Es ist ersichtlich, daß bei dieser Entzerrungskurve die niederfrequenten Signalanteile des wiedergegebenen frequenzmodulierten Signals und damit die höherfrequenten Videosignalanteile nur wenig verstärkt werden, so daß sich insgesamt ein wiedergegebenes Bild ergibt, welches zwar aufgrund der schlechten Übertragungscharakteristik des Magnetband-/Magnetkopf-Systems eine reduzierte Bildschärfe hat, welches aber vergleichsweise wenig Rauschen und wenig auf das Übermodulationsphänomen zurückgehende "Flitzer" im Bild hat.

Bei einem Magnetband-/Magnetkopf-System mit einer mittleren Übertragungscharakteristik hat beispielweise der Pegel des hochfrequenten Anteils des am Eingang E anliegenden frequenzmodulierten Wiedergabesignals einen mittleren Wert. Dieses Signal wird in der Schaltung 1 zur automatischen Verstärkungsregelung beispielsweise um den Faktor 2 verstärkt, um auf den gewünschten Pegel zu gelangen, und dann der Entzerrerschaltung 2 zugeführt.

Ferner werden der Entzerrerschaltung 2 über den Kondensator C1 und den Widerstand R1 die niederfrequenten Anteile des wiedergegebenen frequenzmodulierten Signals zugeführt, die beispielsweise ebenfalls einen mittleren Pegel aufweisen. Die Wirkung, die diese niederfrequenten Signalanteile auf die Entzerrercharakterisik aufweisen, ist demnach in diesem Fall mittel. Die insgesamt erhaltene Übertragungscharakteristik der Entzerrerschaltung ist in Figur 2 mit H2 bezeichnet. Es ist ersichtlich, daß bei dieser Entzerrerkurve die niederfrequenten Signalanteile des wiedergegebenen frequenzmodulierten Signals und damit die höherfrequenten Videosignalanteile stärker angehoben werden als bei H1, so daß sich insgesamt ein wiedergegebenes Bild mit einer mittleren Bildschärfe ergibt.

Bei einem Magnetband-/Magnetkopf-System mit einer guten Übertragungscharakteristik hat beispielsweise der Pegel des hochfrequenten Anteils des am Eingang E anliegenden frequenzmodulierten Wiedergabesignals einen hohen Wert. Dieses Signal braucht in der Schaltung 1 zur automatischen Vestärkungsregelung keiner Verstärkung mehr unterworfen werden, um auf den gewünschten Pegel zu gelangen und wird demzufolge unverändert der Entzerrerschaltung 2 zugeführt. Ferner werden der Entzerrerschaltung 2 über den Kondensator C1 und den Widerstand R1 die niederfrequenten Anteile des wiedergegebenen frequenzmodulierten Signals zugeführt, die beispielsweise ebenfalls einen hohen Pegel aufweisen. Die Wirkung, die diese niederfrequenten Signalanteile auf die Entzerrercharakteristik haben, ist demnach stark. Die insgesamt erhaltene Übertragungscharakteristik der Entzerrerschaltung ist in Figur 2 mit H3 bezeichnet. Es ist ersichtlich, daß bei dieser Entzerrerkurve die niederfrequenten Signalanteile des wiedergegebenen frequenzmodulierten Signals und damit die höherfrequenten Videosignalanteile noch stärker angehoben werden als bei H1 und H2, so daß sich insgesamt ein wiedergegebenes Bild mit einer hohen Bildschärfe ergibt.

Zusammenfassend betrachtet ist die in der Figur 1 gezeigte Anordnung demnach in der Lage, für verschiedene Übertragungscharakteristiken des Magnetband-/Magnetkopf-Systems verschiedene Entzerrerkurven zu liefern, so daß für jede einzelne Übertragungscharakteristik die jeweils beste Entzerrerkurve Anwendung findet. Vorteilhaft ist insbesondere der äußerst geringe Schaltungsaufwand zur Realisierung der in Figur 1 gezeigten Anordnung, der beispielsweise im Vergleich zur bekannten Anordnung gemäß Figur 3 lediglich in einem zusätzlichen Kondensator und einem zusätzlichen Widerstand besteht.

Folgende Dimensionierung der Entzerrerschaltung 2 in Figur 1 liefert bei VHS-PAL-Videorecordern besonders gute Ergebnisse:
- CO:: 68 pf
- LO:: 15 µH
- RO:: 2,7 kOhm
- C1:: 0,1 F
- R1:: 270 Ohm

## Patentansprüche

1. Verfahren zur wiedergabeseitigen Aufbereitung eines frequenzmoduliert aufgezeichneten Videosignals, bei welchem das von den Wiedergabemagnetköpfen wiedergegebene Signal einer automatischen Verstärkungsregelung und einer Singalentzerrung, wobei der Frequenzgang der Entzerrungsschaltung zu hohen Frequenzen hin zunimmt, unterworfen und das entzerrte Signal frequenzdemoduliert wird,
**dadurch gekennzeichnet,** daß zur Signalentzerrung zusätzlich die niederfrequenten Anteile des wiedergegebenen frequenzmodulierten Signals unter Umgehung der automatischen Verstärkungsregelung verwendet werden.

2. Anordnung zur wiedergabeseitigen Aufbereitung eines frequenzmoduliert aufgezeichneten videosignals, mit
- einer Schaltung (1) zur automatischen Verstärkungsregelung, der das von den Wiedergabemagnetköpfen wiedergegebene Signal zugeführt wird,
- einer mit der Schaltung (1) zur automatischen Verstärkungsregelung verbundenen Schaltung (2) zur Signalentzerrung, deren Frequenzgang zu hohen Frequenzen hin zunimmt, und
- einem Frequenzdemodulator (5) zur Frequenzdemodulation des entzerrten Signals,
**dadurch gekennzeichnet,** daß sich weiterhin eine mit dem Eingang (E) der Schaltung (1) zur automatischen Verstärkungsregelung verbundene Schaltung (C1, R1) zur Auskopplung der niederfrequenten Anteile des wiedergegebenen frequenzmodulierten Signals enthält, deren Ausgangssignal unter Umgehung der Schaltung (1) zur automatischen Verstärkungsregelung der Schaltung (2) zur Signalentzerrung zugeführt wird.

3. Anordnung nach Anspruch 2,
**dadurch gekennzeichnet,** daß die Schaltung zur Auskopplung der niederfrequenten Anteile des wiedergegebenen frequenzmodulierten Signals eine Reihenschaltung eines ersten Kondensators (C1) und eines ersten Widerstandes (R1) aufweist, daß die Schaltung (2) zur Signalentzerrung eine Reihenschaltung eines zweiten Kondensators (C0) und einer Spule (L0) sowie einen vom Ausgangsanschluß der Spule gegen Masse geschalteten zweiten Widerstand (R0) aufweist, und daß der vom ersten Kondensator (C1) abgelegene Anschluß des ersten Widerstandes (R1) mit dem Ausgangsanschluß der Spule (L0) verbunden ist.

## Claims

1. Method for the playback-side processing of a video signal recorded in frequency-modulated form, in which the signal reproduced by the playback magnetic heads is subjected to automatic amplification control and signal regeneration, the frequency response of the regeneration circuit increasing to high frequencies, and the regenerated signal is frequency modulated, characterized in that the lower frequency contents of the reproduced frequency-modulated signal are additionally used for signal regeneration, avoiding automatic amplification control.

2. Arrangement for the playback-side processing of a video signal recorded in frequency-modulated form with a circuit (1) for automatic amplification control to which the signal reproduced by the playback magnetic heads is supplied, a circuit (2) connected to the circuit (1) for automatic amplification control for signal regeneration, of which the frequency response increases to high frequencies, and a frequency demodulator (5) for the frequency demodulation of the regenerated signal, characterized in that it also contains a circuit (Cl, Rl) connected to the input (E) of the circuit (1) for automatic amplification control for decoupling the lower frequency contents of the reproduced frequency-modulated signal of which the output signal is supplied to the circuit (2) for signal regeneration while avoiding the circuit (1) for automatic amplification control.

3. Arrangement according to claim 2, characterized in that the circuit for coupling out the lower frequency contents of the reproduced frequency-modulated signal has a series circuit of a first capacitor (C1) and a first resistor (R1), in that the circuit (2) for signal regeneration has a series circuit of a second capacitor (CO) and a coil (LO) and a second resistor (RO) connected to earth by the output connection of the coil and in that the connection remote from the first capacitor (C1) of the first resistor (R1) is connected to the output connection of the coil (LO).

## Revendications

1. Procédé pour préparer, côté reproduction, un signal vidéo enregistré avec une modulation de fréquence, selon lequel le signal reproduit par les têtes magnétiques de reproduction est soumis à une régulation automatique d'amplification et à une égalisation, la réponse en fréquence du circuit d'égalisation augmentant vers des fréquences élevées, et le signal égalisé est soumis à une démodulation de fréquence, caractérisé en ce que pour l'égalisation du signal, on utilise en supplément les composantes à basses fréquences du signal reproduit modulé en fréquence, tout en contournant la régulation d'amplification automatique.

2. Dispositif pour préparer, côté reproduction, un signal vidéo enregistré avec modulation de fréquence, comportant
- un circuit (1) pour réaliser la régulation automatique d'amplification et auquel est envoyé le signal reproduit par les têtes magnétiques de reproduction,
- un circuit (2) relié au circuit (1) de régulation automatique d'amplification et servant à réaliser l'égalisation du signal dont la réponse en fréquence augmente vers des fréquences élevées, et
- un démodulateur de fréquence (5) pour réaliser la démodulation de fréquence du signal égalisé,
caractérisé en ce qu'il contient en outre un circuit (C1, R1) qui est relié à l'entrée (E) du circuit (1) pour la régulation automatique d'amplification et sert à découpler les composantes à basses fréquences du signal reproduit modulé en fréquence, et dont le signal de sortie est soumis à une égalisation, tout en contournant le circuit (1) de régulation automatique d'amplification du circuit (2).

3. Dispositif selon la revendication 2, caractérisé en ce que le circuit servant à découpler les composantes à basses fréquences du signal reproduit modulé en fréquence comporte un circuit série formé d'un premier condensateur (C1) et d'une première résistance (Rl), que le circuit (2) d'égalisation du signal contient un circuit série formé d'un second condensateur (C0) et d'une bobine (LO) ainsi qu'une seconde résistance (R0) branchée entre la borne de sortie de la bobine et la masse, et que la borne, qui est éloignée du premier condensateur (C1), de la première résistance (R1) est reliée à la borne de sortie de la bobine (L0).
